# EUROPEAN PATENT SPECIFICATION

(11) **EP 0 841 009 B1**
(45) Date of publication and mention of the grant of the patent: **16.08.2001**
(21) Application number: 97203516.6
(22) Date of filing: 12.11.1997
(51) Int. Cl.: A21C 11/04

(54) **A device for shaping portions of bread dough or the like**
Vorrichtung zum Formen von Brotteigstücken oder dergleichen
Appareil pour la mise en forme de morceaux de pâte à pain ou similaire

(30) Priority: 12.11.1996 IT MI962348; 16.05.1997 IT MI971158
(43) Date of publication of application: 13.05.1998
(60) Divisional application: 01200536.9
(73) Proprietor: Italiana Agro Alimentare S.r.l., 27029 Vigevano (Pavia) (IT)
(72) Inventor: Sigoni, Riccardo, 27029 Vigevano - Pavia (IT); Varvello, Franco, 27029 Vigevano - Pavia (IT); Rosso, Marco, 17026 Noli - Savona (IT)
(74) Representative: Siniscalco, Fabio

(56) References cited:
- WO-A-97/31539
- DE-A- 2 831 195
- FR-A- 781 702
- US-A- 2 818 645
- US-A- 2 837 043
- US-A- 3 417 713
- US-A- 3 536 014
- US-A- 3 936 255
- US-A- 3 994 652
- US-A- 4 789 555
- US-A- 5 549 467

## Description

The present invention relates in general to a device for shaping portions of bread dough or the like.

In the field of the production of bread and similar baked products it is known to shape portions of bread dough into suitable substantially flat loaves so that the loaf can easily be divided into separate bread rolls.

The shaping is generally performed by the baker who imparts to the prepared bread dough lines of weakening which facilitate its division into portions once the loaf is baked.

However, the shaping operation by the baker is somewhat lengthy and tedious and gives the loaves an artificial appearance which is not pleasing to final purchasers who prefer to buy small bread rolls.

A recognized requirement in the field of the shaping of portions of bread dough is that of simplifying and speeding up operations to shape bread dough and, at the same time, producing loaves which can easily be divided into separate bread rolls having a certain regularity of shape.

US patent no. 2,818,645 relates to a manually usable handle-equipped implement for imprinting and cutting a sheet or equivalent batch of dough. More specifically, the above patent discloses a horizontally elongate roller which has axially aligned freely rotable hand-grips or handles at its ends, the roller itself being in the form of a hollow cylinder having closed ends and having its peripheral surface of cellular form, the cells defining rows of what may be called pockets, each pocket, in turn, having a main outer portion and a central inner portion with said portions cooperating in cutting dough in a manner which is utilized, primarily, in preparing so-called square doughnuts.

U.S. patent no. 3,536,014 discloses an attachment for a dough forming machine of the type which forms dough into small disc or ball-like masses which, upon subsequent baking, are formed into rolls, hamburger buns or the like. The attachment is in the nature of a scoring or imprinting device for disfiguring the wads of dough such that, upon subsequent baking, the resultant bakery product will bear a distinct design on the upper and lower surfaces thereof.

U.S. patent no. 5,549,467 discloses an apparatus that forms flat thin ellipses of dough from a batch of dough, the apparatus including a housing that supports a conveyor, a press and a cutter. The cutter includes an elliptically shaped cutting edge so that, as a flat thin sheet of dough passes underneath the cutter, the cutter cuts ellipses of dough for delivery to a baking device.

US patent no. 4,789,555 discloses an apparatus and a method for preparing a patterned baked good by cutting a dough piece and impressing a pattern on the dough piece.

WO 97/31539 discloses a method of baking bread from dough including the steps of preparing the dough, rolling out the dough into a flat strip cutting the strip of dough into pieces and baking the flat pieces of dough in an oven to a temperature of 250-270°C. This documents also discloses a roller for use with the method for cutting the dough.

U.S. patent no. 3,936,255 discloses an automatic and continuous dough processing apparatus for embossing designs into wads of dough formed in predetermined masses. By utilizing the embossing principle of this invention, hand braided bread loaves may be manufactured in an automatic and continuous fashion with much less time spent in preparing each loaf.

The object of the present invention is to propose a shaping device which satisfies the aforementioned requirement.

This object is achieved by a device for shaping portions of bread dough or the like, comprising a roller having opposed side handles, a substantially cylindrical central body, a plurality of discs projecting from the central body and extending around its periphery, and shaping elements projecting from the central body characterized in that said elements comprise a plurality of walls projecting therefrom, extending transversely relative to the discs, and arranged in series, each series extending substantially helically relative to the central body.

Further characteristics and advantages of the shaping device according to the invention will become clear from the description of a preferred embodiment and from the description of apparatus incorporating the device of the invention, the descriptions being given by way of non-limiting example, with reference to the appended drawings, in which:
Figure 1 is a perspective view of a device for shaping portions of bread dough according to the invention,
Figure 2 is a partially-sectioned perspective view of apparatus for shaping portions of bread dough, incorporating the device of Figure 1,
Figure 3 is a perspective view of a loaf produced by the device of Figure 1.

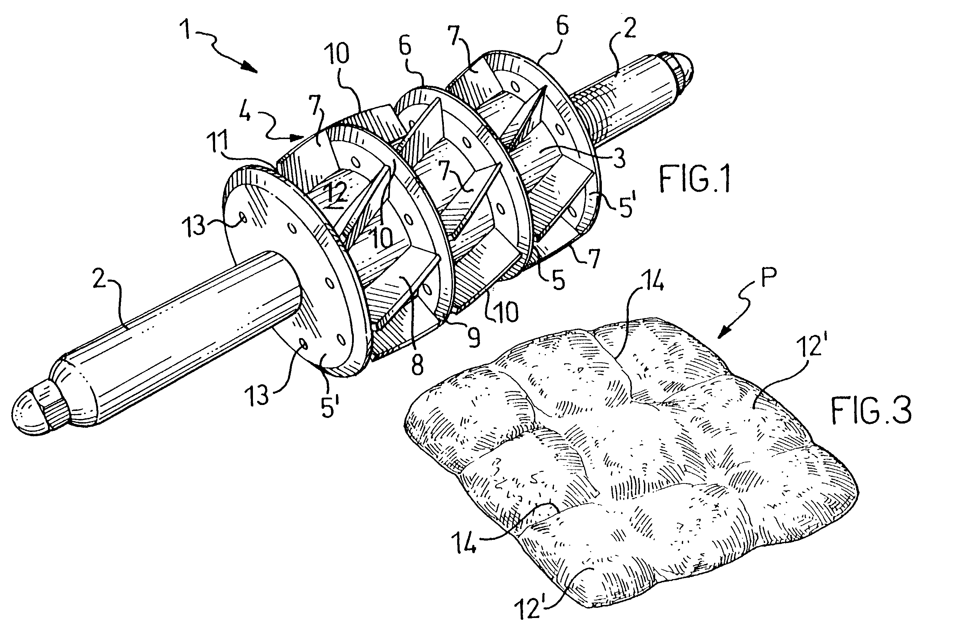

Figure 1 shows a device for shaping bread dough according to the invention, constituted by a roller, generally indicated 1. The roller is shaped substantially like a rolling pin and has two opposed side handles 2 and a cylindrical central body 3. The handles 2 and the central body 3 define an axis of rotation of the roller 1.

The cylindrical body 3 has a smooth surface from which discs 5 and shaping elements, generally indicated 4, project in order to cut a portion of bread dough to confer a precise shape on the resulting loaf after baking.

The cylindrical body 3, the elements 4, and the discs 5 are made of plastics material suitable for contact with foods.

The discs 5 project perpendicularly from the cylindrical body 3 and are arranged around its periphery, forming spaced-apart rings lying in planes perpendicular to the axis of rotation.

In particular, the discs 5 are spaced apart uniformly and have respective outer edges 6 facing away from the cylindrical body 3 and lying on a cylindrical surface coaxial with the cylindrical body 3.

The shaping elements 4 comprise walls 7 which are arranged in series 8 and extend substantially transversely relative to the discs 5 which are intersected by the walls 7 at intersections 9.

The series 8 of walls 7 are spaced uniformly on the cylindrical body 3 and extend over its entire length from one first end wall, indicated 5', to the other.

In the roller 1 according to the invention, the series 8 extend substantially helically relative to the cylindrical body 3. In particular, each wall 7 of a series 8 is disposed and extends between two consecutive discs 5 and is inclined at a predetermined angle thereto.

The walls 7 are also twisted so as to be perpendicular to the surface of the cylindrical body 3 and each has an edge 10 which lies on the cylindrical surface defined by the edges 6 of the discs 5. The edges 6, 10 of the discs 5 and of the walls 7, respectively, are blade-shaped and, at the intersections 9 between the edges 6, 10 of the discs 5 and of the walls 7, the walls 7 have grooves 11 beside the discs 5.

The discs 5 and the walls 7 define a plurality of substantially rhomboid cells 12 each of which is intended to define an individual portion 12' of the loaf indicated P in Figure 3.

The discs have a through-hole 13 in each cell 12, in the vicinity of the surface of the cylindrical body 3.

With regard to the manual use of the shaping device described above, the user arranges a strip of bread dough on a work surface. He then applies the rolling-pin like roller 1 with a certain pressure such as not to cause pieces of dough to be separated.

Owing to the helical shape of the walls 7, the dough is cut but also stretched torsionally. This deformation is taken up resiliently by the dough but can confer on the baked loaf P a rustic and homemade appearance since, although its lines of weakening 14 are substantially straight, they follow an uneven path.

Moreover, instead of having a square appearance, the individual portions 12' have a rustic and roundish appearance with some surface irregularities.

The shaping device described above can advantageously be used in automatic dough-shaping apparatus.

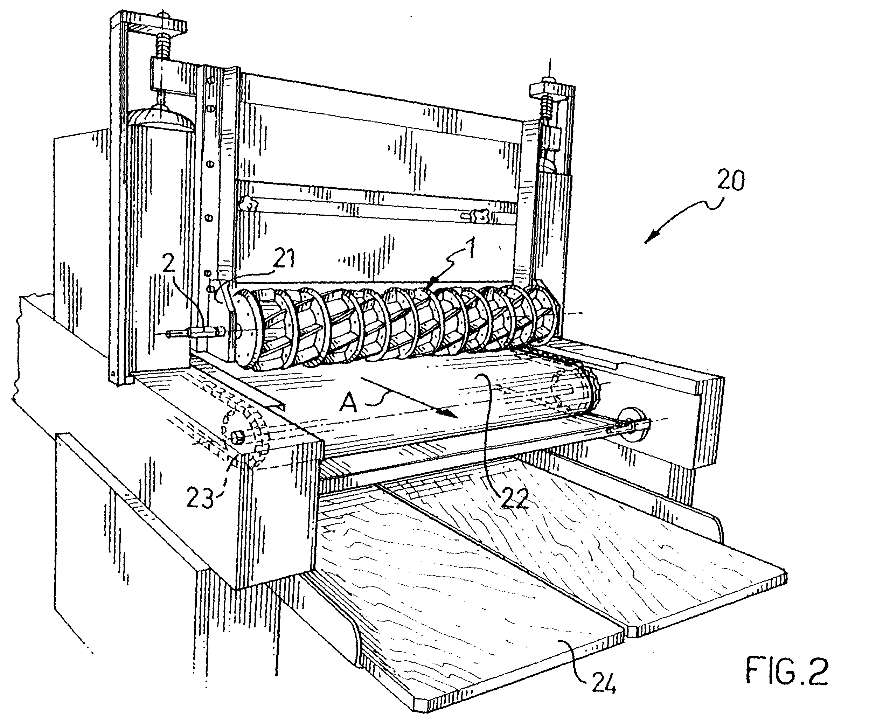

Apparatus of the type specified is generally indicated 20 in Figure 2. It has a support frame 21 and a substantially horizontal conveyor belt 22 extending between rollers 23, at least one of which is driven.

The belt 22 is intended to support portions of bread dough and defines a movable conveyor surface which has a direction of movement A. The movable surface follows a path extending between a kneading station, not shown and of conventional type, in which the dough is deposited on the belt 22, and a collecting board 24 used for passing the shaped portions of dough into an oven.

The apparatus 20 according to the invention comprises, above the above-defined movable surface, a roller 1 as described.

The shaping roller 1 is freely rotatable on its handles 2 which act as pins. They are engaged on the frame 21 at the sides of the belt 22. The roller 1 is substantially parallel to the movable surface and substantially perpendicular to the direction A, and the cylindrical surface defined by the edges 6, 10 of the discs 5 and of the walls 7 is disposed at a predetermined distance from the movable conveyor surface such that the portions of bread dough interfere with the roller 1 whilst being supported on the movable conveyor surface.

In order to satisfy further and contingent requirements, an expert in the art may apply to the above-described shaping device and apparatus many further modifications and variations all of which, however, fall within the scope of protection of the present invention as defined in the appended claims.

## Claims

1. A device for shaping portions of bread dough or the like, comprising a roller (1) having opposed side handles (2), a substantially cylindrical central body (3), a plurality of discs (5) projecting from the central body (3) and extending around its periphery, and shaping elements (4) projecting from the central body (3) characterized in that said elements comprise a plurality of walls (7) projecting therefrom, extending transversely relative to the discs (5), and arranged in series (8), each series extending substantially helically relative to the central body (3).

2. A shaping device according to claim 1, in which the discs (5) are perpendicular to the central body (3) and uniformly spaced apart and each wall (7) of series (8) is disposed between two consecutive discs (5) and is inclined at a predetermined angle thereto.

3. A shaping device according to claim 2, in which each wall (7) has a twist such that it is perpendicular to the central body (3).

4. A shaping device according to anyone of preceding claims, in which the discs (5) and the walls (7) define a plurality of cells (12), the discs (5) having at least one through-hole (13) in each cell (12).

5. A shaping device according to anyone of preceding claims, in which the discs (5) and the walls (7) have respective blade-shaped edges (6,10) facing away the central body (3).

6. A shaping device according to claim 5 in which the edges (6,10) of the discs (5) and of the walls (7), respectively, lie on a single cylindrical surface coaxial with the central body (3).

7. Apparatus (20) for shaping portions of bread dough, using the shaping device according to anyone of preceding claims, comprising a support frame (21) and a conveyor belt (22) extending between rollers (23) and defining a movable conveyor surface for supporting portions of bread dough and defining a direction of movement (A), in which a shaping roller (1) disposed above the movable surface is freely rotatable on the said handles (2) which are formed as pins and bear on the frame (21) at the sides of the belt (22) substantially parallel to the movable surface, the cylindrical surface being disposed at a predetermined distance from the movable conveyor surface such that the portions of bread dough interfere with the roller (1) whilst they are supported on the movable conveyor surface.

8. Apparatus (20) according to claim 7, in which the shaping roller (1) is arranged so as to be substantially perpendicular to the direction of movement (A) of the movable conveyor surface.

## Patentansprüche

1. Vorrichtung zum Formen von Einheiten eines Brotteigs oder ähnlichem, umfassend eine Rolle (1) mit gegenüberliegenden Seitengriffen (2), einem im wesentlichen zylindrischen Zentralkörper (3), einer Vielzahl von Scheiben (5), welche von dem Zentralkörper (3) hervorstehen und um den Umfang davon verlaufen, und Formelementen (4), welche von dem Zentralkörper (3) hervorstehen, dadurch gekennzeichnet, daß die Elemente eine Vielzahl von Wänden (7) umfassen, welche davon hervorstehen, relativ zu den Scheiben (5) quer verlaufen und in Reihen (8) angeordnet sind, wobei'jede Reihe im wesentlichen schraubenlinienförmig relativ zu dem Zentralkörper (3) verläuft.

2. Formvorrichtung nach Anspruch 1, wobei die Scheiben (5) lotrecht zu dem Zentralkörper (3) verlaufen und gleichmäßig in Abstand angeordnet sind und jede Wand (7) einer Reihe (8) zwischen zwei aufeinanderfolgenden Scheiben (5) angeordnet ist und mit einem vorbestimmten Winkel dagegen geneigt ist.

3. Formvorrichtung nach Anspruch 2, wobei jede Wand (7) eine Verwindung aufweist, so daß diese lotrecht zu dem Zentralkörper (3) verläuft.

4. Formvorrichtung nach einem der vorangehenden Ansprüche, wobei die Scheiben (5) und die Wände (7) eine Vielzahl von Zellen (12) definieren, wobei die Scheiben (5) mindestens ein Durchgangsloch (13) in jeder Zelle (12) aufweisen.

5. Formvorrichtung nach einem der vorangehenden Ansprüche, wobei die Scheiben (5) und die Wände (7) jeweilige klingenförmige Kanten (6, 10) aufweisen, welche von dem Zentralkörper (3) abgewandt sind.

6. Formvorrichtung nach Anspruch 5, wobei die Kanten (6, 10) der Scheiben (5) bzw. der Wände (7) auf einer einzigen zylindrischen Fläche, welche koaxial mit dem Zentralkörper (3) verläuft, angeordnet sind.

7. Vorrichtung (20) zum Formen von Einheiten eines Brotteigs unter Verwendung der Formvorrichtung nach einem der vorangehenden Ansprüche, umfassend einen Stützrahmen (21) und ein Förderband (22), welches zwischen Rollen (23) verläuft und eine bewegliche Förderfläche zum Tragen von Einheiten eines Brotteigs definiert sowie eine Bewegungsrichtung (A) definiert, wobei eine Formrolle (1), welche über der beweglichen Fläche angeordnet ist, im wesentlichen parallel zu der beweglichen Fläche frei drehbar an den Griffen (2) angebracht ist, welche als Stifte ausgebildet sind und an dem Rahmen (21) an den Seiten des Bands (22) aufliegen, wobei die zylindrische Fläche in einer vorbestimmten Entfernung von der beweglichen Förderfläche angeordnet ist, so daß die Rolle (1) auf die Einheiten eines Brotteigs einwirkt, während diese auf der beweglichen Förderfläche getragen werden.

8. Vorrichtung (20) nach Anspruch (7), wobei die Formrolle (1) derart angeordnet ist, daß diese im wesentlichen lotrecht zu der Bewegungsrichtung (A) der beweglichen Förderfläche verläuft.

## Revendications

1. Dispositif de mise en forme de portions de pâte à pain ou analogue, comprenant un rouleau (1) possédant des poignées latérales opposées (2), un corps central pratiquement cylindrique (3), plusieurs disques (5) dépassant du corps central (3) et s'étendant autour de sa périphérie, et des éléments de mise en forme (4) dépassant du corps central (3), caractérisé en ce que lesdits éléments comprennent plusieurs parois (7) qui en dépassent, qui s'étendent transversalement aux disques (5) et qui sont disposées en série (8), chaque série étant disposée pratiquement en hélice par rapport au corps central (3).

2. Dispositif de mise en forme selon la revendication 1, dans lequel les disques (5) sont perpendiculaires au corps central (3) et espacées uniformément, et chaque paroi (7) de la série (8) est disposée entre deux disques consécutifs (5) et est inclinée d'un angle prédéterminé.

3. Dispositif de mise en forme selon la revendication 2, dans lequel chaque paroi (7) présente une torsion telle qu'elle est perpendiculaire au corps central (3).

4. Dispositif de mise en forme selon l'une quelconque des revendications précédentes, dans lequel les disques (5) et les parois (7) délimitent plusieurs cellules (12), les disques (5) ayant au moins un trou débouchant (13) dans chaque cellule (12).

5. Dispositif de mise en forme selon l'une quelconque des revendications précédentes, dans lequel les disques (5) et les parois (7) ont des bords respectifs (6, 10) en forme de lame tournés du côté opposé au corps central (3).

6. Dispositif de mise en forme selon la revendication 5, dans lequel les bords (6, 10) des disques (5) et des parois (7) respectivement se trouvent sur une même surface cylindrique coaxiale au corps central (3).

7. Appareil (20) de mise en forme de portions de pâte à pain, mettant en oeuvre le dispositif de mise en forme selon l'une quelconque des revendications précédentes, comprenant un châssis de support (21) et une courroie transporteuse (22) s'étendant entre les rouleaux (23) et délimitant une surface mobile de transport destinée à supporter les portions de pâte à pain et délimitant une direction de déplacement (A), dans lequel un rouleau de mise en forme (1) disposé au-dessus de la surface mobile peut tourner librement sur les poignées (2) qui ont la forme de broches et sont en appui sur le châssis (21) sur les côtés de la courroie (22) en direction pratiquement parallèle à la surface mobile, la surface cylindrique étant disposée à une distance prédéterminée de la surface mobile de transport afin que les portions de pâte à pain coopèrent avec le rouleau (1) lorsqu'elles sont supportées par la surface mobile de transport.

8. Appareil (20) selon la revendication 7, dans lequel le rouleau de mise en forme (1) est disposé afin qu'il soit pratiquement perpendiculaire à la direction de déplacement (A) de la surface mobile.
